(19) Europäisches Patentamt
European Patent Office
Office européen des brevets

(11) **EP 2 261 697 A1**

(12) **EUROPEAN PATENT APPLICATION**
published in accordance with Art. 153(4) EPC

(43) Date of publication:
**15.12.2010 Bulletin 2010/50**

(21) Application number: **08738808.8**

(22) Date of filing: **25.03.2008**

(51) Int Cl.:
*G02B 5/02* (2006.01)  *B32B 27/30* (2006.01)
*C08F 290/12* (2006.01)  *G02F 1/1335* (2006.01)
*G09F 9/00* (2006.01)

(86) International application number:
**PCT/JP2008/055513**

(87) International publication number:
**WO 2009/118820 (01.10.2009 Gazette 2009/40)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Daicel Chemical Industries, Ltd.**
**Osaka-shi, Osaka 530-0001 (JP)**

(72) Inventor: **HAYASHI, Masaki**
**Himeji-shi**
**Hyogo 671-1283 (JP)**

(74) Representative: **Grünecker, Kinkeldey,**
**Stockmair & Schwanhäusser**
**Anwaltssozietät**
**Leopoldstrasse 4**
**80802 München (DE)**

(54) **ANTIGLARE FILM AND PROCESS FOR PRODUCING THE SAME**

(57)    An anti-glare film which can prevent reflected glare in a display and a whitening in a displayed black image and provide a contrasty image display in which black color appears more sharply is provided.

The anti-glare film is produced by applying a liquid composition containing a nonreactive (meth)acrylic resin having a weight-average molecular weight of 30,000 to 1,000,000, a (meth)acrylic resin having a weight-average molecular weight of 1,000 to 100,000 and a polymerizable group, a polyfunctional (meth)acrylate, and a solvent having a boiling point of not lower than 100°C, and producing convection along with volatilization of the solvent, wherein the anti-glare film has a ridge formed dispersively and in a random direction on a surface thereof, and the total area of the ridges is not more than 50% of a whole surface area of the anti-glare film. The ridge may have an average height of 0.05 to 10 μm and an average width of 0.1 to 30 μm. The ridge may have a depression extending along a longitudinal direction thereof.

EP 2 261 697 A1

**Description**

TECHNICAL FIELD

The present invention relates to an anti-glare film available for a variety of displays for high-definition image, which are used for image display of a computer, a word processor, a television, and others, and a process for producing the same.

BACKGROUND ART

In recent years, for displays such as a cathode ray tube (CRT) display, a liquid crystal display, a plasma display, a touch panel-equipped input device, an organic or inorganic EL (electroluminescence) display, and a FED (field emission display), the reflection of an external (or outside) light source (such as a fluorescent light or sunlight) on a surface of the display interferes with an image displayed on the screen, and the image becomes hard to watch. That is, since such a reflection significantly deteriorates visibility, an anti-glare layer for diffusing a reflected light adequately is attached to display surfaces of various displays.

As the anti-glare layer, for example, Japanese Patent Application Laid-Open No. 18706/1994 (JP-6-18706A, Patent Document 1) discloses an abrasion-resistant anti-glare sheet which comprises a transparent substrate and an anti-glare layer formed thereon and essentially consisting of a resin bead having a refraction index of 1.40 to 1.60 and an ionizing-radiation-curable resin composition. Moreover, Japanese Patent Application Laid-Open No. 20103/1998 (JP-10-20103A, Patent Document 2) discloses an anti-glare sheet which is a laminated film at least comprising a substrate film and an anti-glare layer, wherein the anti-glare layer contains 20 to 30 parts by weight of a transparent particle having a mean particle size of 0.5 to 1.5 $\mu$m relative to 100 parts by weight of a curable resin. Further, Japanese Patent No. 3314965 (JP-3314965B, Patent Document 3) discloses an abrasion-resistant anti-glare sheet comprising a transparent substrate and an anti-glare layer formed thereon, wherein the anti-glare layer comprises an ionizing-radiation-curable resin composition and an organic filler has a finely uneven structure on a surface thereof. In addition, an anti-glare layer having an uneven surface structure formed by cohesion of a particle such as a cohesive silica has been also known.

However, for each of these anti-glare layers, since an uneven structure is formed on a surface thereof by a filler or the like, the uneven structure of the surface cannot accurately be controlled due to the production process. Moreover, it is difficult to form the uneven pattern of the surface having projections uniformly in shape, position, size, and others at regular intervals. As a result, the position, size, shape, dimension, frequency (pitch), and others in the uneven pattern of the uneven surface structure cannot be controlled, and the anti-glareness of the resulting anti-glare layers varies widely according to the position. Moreover, an anti-glare layer obtained by laminating a film having an uneven structure on a layer surface and transferring the uneven structure on the surface is also known. However, the transferring step is necessary for the production process of such an anti-glare layer, and as a result, the number of steps is increased and production facilities are also required.

Furthermore, Japanese Patent Application Laid-Open No. 16851/1994 (JP-6-16851A, Patent Document 4) discloses an abrasion-resistant anti-glare sheet which comprises a transparent substrate and an anti-glare layer formed on the substrate and essentially consisting of an ionizing-radiation-curable resin composition and shaped by a mat patterned film having a finely uneven surface structure. Moreover, Japanese Patent Application Laid-Open No. 206317/2000 (JP-2000-206317A, Patent Document 5) discloses an anti-glare sheet which comprises a transparent substrate film and an anti-glare layer formed on one or both side(s) of the substrate film and comprising at least an ionizing-radiation-curable resin, wherein the anti-glare layer has a periodic uneven structure formed on a surface thereof. For the production processes of these films, a controlled satisfactory uneven surface can be formed using a patterned film having a regular structure or a mat patterned film having a controlled uneven surface structure.

However, since it is difficult to produce such a mat patterned film itself, the anti-glare sheet is not suitable for mass production. Further, it has been also known that such an artificial regular pattern or arrangement of the surface of the anti-glare layer inescapably causes an interference of the reflected light, and then induces moire pattern (formation of a rainbow pattern).

Japanese Patent Application Laid-Open No. 126495 /2004 (JP-2004-126495A, Patent Document 6) discloses an anti-glare sheet comprising at least an anti-glare layer, wherein the anti-glare layer has an uneven structure on a surface thereof, and the anti-glare sheet isotropically transmits and scatters an incident light to show the maximum value of the scattered light intensity at a scattering angle of 0.1 to 10°, and has a total light transmittance of 70 to 100%. This document discloses a process for producing an anti-glare sheet, which comprises forming a regular phase-separation structure and an uneven surface structure corresponding to the phase structure by spinodal decomposition of a plurality of polymers from a liquid phase containing the polymers, a curable resin precursor, and a solvent with evaporating the solvent. In the process, since the anti-glare layer is produced by making use of the autonomous self-ordering forming force, a moire pattern (formation of a rainbow pattern) due to an interference of the reflected light is hardly induced in spite of a fully controlled shape and arrangement of the surface, differently from a surface having an artificially-formed finely uneven structure.

However, also in the process, it is difficult to control phase separability. Further, since slight variation of a lot number of material, a polymer formulation and other factors remarkably changes the size of the phase-separation structure, it is difficult to produce an anti-glare sheet stably.

Further, Japanese Patent Application Laid-Open No. 106224/2006 (JP-2006-106224A, Patent Document 7) discloses a process for producing an anti-glare film, which comprises applying a solution containing at least one polymer, at least one curable resin precursor, and a solvent having a boiling point of not lower than 100°C, generating a cellular rotating convection in a drying process, and then curing the resulting coated layer. This document discloses that in the process at least two components selected from the group consisting of the polymer and the curable resin precursor may have phase separability from each other, and that the surface of the coated layer is raised by the cellular rotating convection in the drying process to form a regularly or periodically uneven pattern on the surface. In this process, since the anti-glare film is formed by making use of two kinds of autonomous self-ordering forming forces (that is, phase separation and convection), an uneven pattern having a controlled interval depending on the size and arrangement of the convection cell and a good shape and height obtained by phase separation is formed. That is, an anti-glare sheet in which the shape, arrangement, and size of the uneven pattern (or part) are sufficiently controlled can be obtained.

However, in this process, the phase separability of the two components is strong, and the anti-glare film obtained by the convection has a dense structure which has a small distance between domains and a small proportion of the flat or even area (sea area). Therefore, a low-refraction-index layer, which is applied on the anti-glare film for the purpose of reducing the reflected light, cannot be formed along (or conforming to) the uneven pattern of the surface of the anti-glare film, and it is difficult to further improve blackness (or black level) of a displayed black image (or picture).

    Patent Document 1: JP-6-18706A (Claim 1)
    Patent Document 2: JP-10-20103A (Claim 1)
    Patent Document 3: JP-3314965B (Claim 1)
    Patent Document 4: JP-6-16851A (Claim 1)
    Patent Document 5: JP-2000-206317A (Claim 1)
    Patent Document 6: JP-2004-126495A (Claims 1 and 21, and Paragraph No. [0090])
    Patent Document 7: JP-2006-106224A (Claim 1, and Figs. 1 to 4)

DISCLOSURE OF THE INVENTION

PROBLEMS TO BE SOLVED BY THE INVENTION

It is therefore an object of the present invention to provide an anti-glare film which can prevent reflected glare caused by an external light reflected from a display surf ace and a whitening in a displayed black image and provide a contrasty image display in which black color appears more sharply, an anti-glare sheet comprising the film, and a production process of the film.

Another object of the present invention is to provide an anti-glare film which has a high anti-glareness and can prevent moire pattern (formation of a rainbow pattern) due to an interference of a reflected light, an anti-glare sheet comprising the film, and a production process of the film.

It is still another object of the present invention to provide an anti-glare film which allows a low-refraction-index layer to be layered thereon along the shape of the surface of the anti-glare film with a high adaptability and can improve blackness of a displayed black image (or picture), an anti-glare sheet comprising the film, and a production process of the film.

MEANS TO SOLVE THE PROBLEMS

The inventor of the present invention made intensive studies to achieve the above objects and finally found that curing of a coated layer containing a nonreactive (meth)acrylic resin, a (meth)acrylic resin having a polymerizable group, and a polyfunctional (meth)acrylate forms an anti-glare film having a ridge formed dispersively and in a random direction on a surface thereof and having a small area proportion of the ridges in a surface area thereof , and that such a film prevents reflected glare caused by an external light reflected from a display surface and a whitening in a displayed black image and provides a contrasty image display in which black color appears more sharply. The present invention was accomplished based on the above findings.

That is, the anti-glare film of the present invention comprises a cured product of a nonreactive (meth)acrylic resin having a weight-average molecular weight of 30,000 to 1,000,000, a (meth) acrylic resin having a weight-average molecular weight of 1,000 to 100,000 and a polymerizable group, and a polyfunctional (meth) acrylate, the anti-glare film having a ridge (or ridged strip) formed dispersively and in a random direction on a surface thereof, and the total area of the ridges is not more than 50% of a whole surface area of the anti-glare film. The (meth)acrylic resin having the polymerizable group may comprise a (meth)acrylic resin having a (meth)acryloyl group in a side chain thereof. The ridge may have an average height of, for example, about 0.05 to 10 $\mu$m and an average width of, for example, about 0.1 to 30 $\mu$m. The ridge may have a depression (or depressed portion) extending along a longitudinal direction thereof. In the anti-glare film, the ridge may be formed by phase separation of at least two components selected from the group consisting of the (meth)acrylic resin, the (meth)acrylic resin having the polymerizable group, and the polyfunctional (meth) acrylate due to spinodal decomposition, and production (or generation) of convection.

The present invention includes a process for producing an anti-glare film, which comprises a drying step which comprises producing convection in a coated layer comprising a liquid composition (or a solution) containing a nonreactive (meth)acrylic resin having a weight-average molecular weight of 30,000 to 1,000,000, a (meth) acrylic resin having a weight-average molecular weight of 1,000 to 100,000 and a polymerizable group, a polyfunctional (meth) acrylate, and a first solvent having a boiling point of not lower than 100°C while volatilizing the first solvent, and a curing step for curing the resulting dried coated layer.

The liquid composition may further contain a second solvent having a different boiling point from that of the first solvent. In the drying step, at least two components of the (meth)acrylic resin, the (meth)acrylic resin having the polymerizable group, and the polyfunctional (meth)acrylate may be phase-separated by spinodal decomposition, and the production of convention in the liquid composition may upheave the surface of the coated layer to form a ridge. In the curing step, the coated layer may be irradiated with at least one selected from the group consisting of an active (or actinic) energy ray and heat.

The present invention also includes an anti-glare sheet comprising a transparent support and the anti-glare film formed on the support. The anti-glare sheet may further comprise a low-refraction-index layer formed on the anti-glare film. The anti-glare sheet is suitable for a display apparatus such as a liquid crystal display, a cathode ray tube display, a plasma display, or a touch panel-equipped input device.

Throughout this description, the term " (meth) acrylic resin" is used as a generic term for a resin comprising a monomer unit selected from the group consisting of a methacrylic acid-series monomer and an acrylic monomer as a polymer component. Moreover, the term "(meth)acrylate" is used as a generic term for a monomer having a polymerizable group selected from the group consisting of a methacryloyl group and an acryloyl group.

EFFECTS OF THE INVENTION

Use of the anti-glare film of the present invention for various display apparatuses prevents reflected glare caused by an external light reflected from a display surface, inhibits a whitening in a displayed black image, and provides a contrasty image display in which black color appears more sharply. Moreover, the anti-glare film has a high anti-glareness and prevents moire pattern (formation of a rainbow pattern) due to an interference of a reflected light. Further, the anti-glare film allows a low-refraction-index layer to be layered (or disposed) thereon along the shape of the surface of the anti-glare film with a high adaptability and improves blackness (or black level) of a displayed black image (or picture).

BRIEF DESCRIPTION OF DRAWINGS

Fig. 1 represents a laser reflection microscope photograph (with 5 magnifications) of an uneven surface of an anti-glare sheet obtained in Example 2.
Fig. 2 represents a laser reflection microscope photograph (with 5 magnifications) of an uneven surface of an anti-glare sheet obtained in Example 4.
Fig. 3 represents a laser reflection microscope photograph (with 5 magnifications) of an uneven surface of an anti-glare sheet obtained in Comparative Example 2.

DETAILED DESCRIPTION OF THE INVENTION

The anti-glare film of the present invention can be produced by making use of convection (convection cell) accompanying phase separation of a plurality of polymers. Specifically, the film can be produced through a drying step which comprises applying (or coating) a coating composition (or a liquid composition) containing a (meth) acrylic resin (sometimes referred to as a "nonreactive (meth)acrylic resin"), a (meth)acrylic resin having a polymerizable group (sometimes referred to as a "reactive (meth) acrylic resin having a polymerizable group" or simply a "reactive (meth)acrylic resin"), a polyfunctional (meth)acrylate, and a solvent having a boiling point of not lower than 100°C and producing convection while volatilizing the solvent to give a coated layer, and a curing step for curing the resulting dried coated layer. More specifically, the film can usually be produced by applying the coating composition on a support and evaporating the solvent from the coated layer. When a separable (or releasable) support is used as the support, the coated layer may be separated (or released) from the support to give an anti-glare film.

(Nonreactive (meth)acrylic resin)

The nonreactive (meth)acrylic resin may include a homo- or copolymer of a (meth)acrylic monomer, a copolymer of a (meth)acrylic monomer and a copolymerizable monomer, and other polymers. The (meth)acrylic monomer may include, for example, (meth)acrylic acid; a $C_{1-10}$alkyl (meth)acrylate such as methyl (meth)acrylate, ethyl (meth)acrylate, butyl (meth)acrylate, t-butyl (meth)acrylate, isobutyl (meth)acrylate, hexyl (meth)acrylate, octyl (meth)acrylate, or 2-ethylhexyl (meth)acrylate; an aryl (meth)acrylate such as phenyl (meth)acrylate; a hydroxyalkyl (meth)acrylate such as hydroxyethyl (meth)acrylate or hydroxypropyl (meth)acrylate; glycidyl (meth)acrylate; an N,N-dialkylaminoalkyl (meth)acrylate; (meth)acrylonitrile; and a (meth)acrylate having an alicyclic hydrocarbon group such as tricyclodecanyl group. The copolymerizable monomer may include a styrenic monomer, a vinyl ester-series monomer (a fatty acid vinyl ester-series monomer), maleic anhydride, maleic acid, and fumaric acid, and others. These monomers may be used alone or in combination.

The (meth)acrylic resin may include, for example, a poly(meth)acrylate such as a poly(methyl methacrylate), a methyl methacrylate-(meth)acrylic acid copolymer, a methyl methacrylate-(meth)acrylate copolymer, a methyl methacrylate-acrylate-(meth)acrylic acid copolymer, and a (meth)acrylate-styrene copolymer (e.g., an MS resin). The preferred (meth)acrylic resin includes a poly ($C_{1-6}$alkyl (meth)acrylate) such as a poly(methyl(meth)acrylate), particularly, a methyl methacrylate-series resin containing methyl methacrylate as a main component (about 50 to 100% by weight, and preferably about 70 to 100% by weight).

The weight-average molecular weight of the (meth)acrylic resin is, for example, about 30,000 to 1,000,000, preferably about 100,000 to 700,000, and more preferably about 200,000 to 500,000 (particularly about 300,000 to 500,000). Such a resin provides a solubility in a dope composition and a film strength after curing in a well-balanced way. In particular, a (meth)acrylic resin having an excessive small molecular weight elevates compatibility to a (meth) acrylic resin having a functional group participating in a curing reaction, which makes formation of a domain structure by generation of phase separation and convection difficult.

The glass transition temperature of the (meth)acrylic resin may be selected from the range of, for example, about -100°C to 250°C, preferably about -50°C to 230°C, and more preferably about 0 to 200°C (e.g., about 50 to 180°C).

Considering the surface hardness, it is advantageous that the glass transition temperature of the (meth) acrylic resin is not lower than 50°C (e.g., about 70°C to 200°C) and preferably not lower than 100°C (e.g., about 100°C to 170°C).

((Meth)acrylic resin having polymerizable group)

A functional group participating in a curing reaction (a functional group reactive to the after-mentioned polyfunctional (meth)acrylate) may be used as the polymerizable group. Such a polymerizable group may be located in a main chain of the (meth)acrylic resin or in a side chain thereof. The polymerizable group may be introduced into the main chain by co-polymerization, co-condensation, or other means, and is usually introduced into the side chain. Such a polymerizable group may include a condensable or reactive functional group (for example, a hydroxyl group, an acid anhydride group, a carboxyl group, an amino group or an imino group, an epoxy group, a glycidyl group, and an isocyanate group), a radical-polymerizable functional group (for example, a $C_{2-6}$alkenyl group such as vinyl, propenyl, isopropenyl, butenyl, or allyl; a $C_{2-6}$alkynyl group such as ethynyl, propynyl, or butynyl; a $C_{2-6}$alkenylidene group such as vinylidene; or a functional group having such a radical-polymerizable functional group (e.g., a (meth)acryloyl group)), and others. Among these functional groups, a radical-polymerizable functional group is preferred.

The (meth)acrylic resin having a polymerizable group in a side chain thereof may be produced by, for example, allowing (i) a (meth) acrylic resin having a reactive group (e.g. , the same group as the functional group exemplified in the paragraph of the condensable or reactive functional group mentioned above) to react with (ii) a compound (a polymerizable compound) having the above-mentioned polymerizable group and a reactive group to the reactive group of the (meth)acrylic resin to introduce the polymerizable group of the compound (ii) into the (meth)acrylic resin.

The (meth)acrylic resin (i) having a reactive group may include a thermoplastic resin having a carboxyl group or an acid anhydride group thereof [for example, a (meth)acrylic resin (e.g., a (meth)acrylic acid-(meth)acrylate copolymer such as a methyl methacrylate-(meth)acrylic acid copolymer, and a methyl methacrylate-acrylate-(meth)acrylic acid copolymer)], a (meth)acrylic resin having a hydroxyl group [e.g., a (meth)acrylate-hydroxyalkyl (meth)acrylate copolymer], and a (meth)acrylic resin having an epoxy group [e.g., a (meth)acrylic resin having a glycidyl group]. Incidentally, among the (meth)acrylic resins (i), the copolymer preferably contains not less than 50% by mol of (meth)acrylic acid. The (meth) acrylic resins (i) may be used alone or in combination.

The reactive group of the polymerizable compound (ii) may include a group reactive to the reactive group of the (meth)acrylic resin (i), for example, the same functional group as the condensable or reactive functional group exemplified in the paragraph of the functional group of the polymer.

The polymerizable compound (ii) may include a polymerizable compound having an epoxy group [for example, an epoxy group-containing (meth)acrylate (e.g., an epoxyC$_{3-8}$alkyl (meth)acrylate such as glycidyl (meth)acrylate or 1,2-epoxybutyl (meth)acrylate; and an epoxycycloC$_{5-8}$alkenyl (meth)acrylate such as epoxycyclohexenyl (meth)acrylate), and allyl glycidyl ether], a compound having a hydroxyl group [for example, a hydroxyl group-containing (meth)acrylate, e.g., a hydroxyC$_{2-4}$alkyl (meth)acrylate such as hydroxypropyl (meth)acrylate; and a C$_{2-6}$alkylene glycol mono(meth) acrylate such as ethylene glycol mono(meth)acrylate], a polymerizable compound having an amino group [for example, an amino group-containing (meth)acrylate; a C$_{3-6}$alkenylamine (such as allylamine); and an aminostyrene (such as 4-aminostyrene or diaminostyrene)], a polymerizable compound having an isocyanate group [for example, an isocyanate group-containing (poly)urethane (meth)acrylate and vinylisocyanate], and a polymerizable compound having a carboxyl group or an acid anhydride group thereof [for example, an unsaturated carboxylic acid or an anhydride thereof (such as (meth) acrylic acid or maleic anhydride)]. These polymerizable compounds (ii) may be used alone or in combination.

Incidentally, the combination of the reactive group of the (meth)acrylic resin (i) and the reactive group of the polymerizable compound (ii) may include, for example, the following combinations:

(i-1) the reactive group of the (meth) acrylic resin (i): a carboxyl group or an acid anhydride group thereof

the reactive group of the polymerizable compound (ii): an epoxy group, a hydroxyl group, an amino group, or an isocyanate group

(i-2) the reactive group of the (meth)acrylic resin (i): a hydroxyl group

the reactive group of the polymerizable compound (ii): a carboxyl group or an acid anhydride group thereof, or an isocyanate group

(i-3) the reactive group of the (meth)acrylic resin (i): an amino group

the reactive group of the polymerizable compound (ii): a carboxyl group or an acid anhydride group thereof, an epoxy group, or an isocyanate group, and

(i-4) the reactive group of (meth)acrylic resin (i): an epoxy group

the reactive group of polymerizable compound (ii): a carboxyl group or an acid anhydride group thereof, or an amino group.

Among the polymerizable compounds (ii), particularly, an epoxy group-containing polymerizable compound (e.g., an epoxy group-containing (meth)acrylate) is preferred.

The polymerizable group-containing polymer, e.g., a polymer in which a polymerizable unsaturated group is introduced into one or some of carboxyl groups in a (meth)acrylic resin, is available, for example, as "CYCLOMER-P" from Daicel Chemical Industries, Ltd. Incidentally, "CYCLOMER-P" is a (meth)acrylic polymer in which epoxy group(s) of 3,4-epoxycyclohexenylmethyl acrylate is allowed to react with one or some of carboxyl groups in a (meth)acrylic acid-(meth)acrylate copolymer for introducing photo-polymerizable unsaturated group(s) into the side chain of the polymer.

The amount of the polymerizable group to be introduced into the (meth)acrylic resin is about 0.001 to 10 mol, preferably about 0.01 to 5 mol, and more preferably about 0.02 to 3 mol relative to 1 kg of the (meth)acrylic resin.

For the introduction of the polymerizable group into the side chain of the (meth)acrylic resin, the proportion of the (meth)acrylic monomer unit having the polymerizable group (a unit corresponding to the monomer) in the total monomer units is, for example, about 10 to 90% by mol, preferably about 20 to 60% by mol, and more preferably about 30 to 50% by mol.

The weight-average molecular weight of the reactive (meth)acrylic resin having such a polymerizable group (the total molecular weight containing the polymerizable group) is, for example, about 1,000 to 100,000, preferably about 5,000 to 50,000, and more preferably about 10,000 to 30,000. Such a resin improves a solubility in a dope composition and a curing reactivity in a well-balanced way.

An uneven surface having projections formed by convection (for example, an uneven surface having projections due to phase-separation structure which is controlled in arrangement and size by convection domain) is finally cured by an active energy ray (e.g., an ultraviolet ray, and an electron beam), heat, or others so that a cured resin is formed. Accordingly, such a cured resin can impart abrasion resistance to the anti-glare film, and can improve durability of the anti-glare film.

The ratio (weight ratio) of the nonreactive (meth)acrylic resin relative to the reactive (meth)acrylic resin having a polymerizable group [the former/the latter] is, for example, about 1/99 to 90/10, preferably about 3/97 to 70/30, and more preferably about 5/95 to 50/50 (particularly about 10/90 to 40/60).

In the present invention, the above-mentioned two kinds of the (meth)acrylic resins are incompatible with each other and have a low phase separability, and are incompatible with each other in the neighborhood of a processing temperature. Such a combination can produce convection by a low phase-separating action and allows the flat (or even) area of the film surface to be increased. Since the (meth) acrylic resin is stiff and has a high light resistance, the anti-glare film has a very excellent durability.

Incidentally, the polymer for forming the phase separation structure may contain other polymers in addition to the above-mentioned two incompatible polymers as long as the effects of the present invention are not deteriorated. Examples of other polymers may include a styrenic resin, an organic acid vinyl ester-series resin, a vinyl ether-series resin, ahalogen-containing resin, an olefinic resin (including an alicyclic olefinic resin), a polycarbonate-series resin, a polyester-series resin, a polyamide-series resin, a thermoplastic polyurethane resin, a polysulfone-series resin (e.g., a polyethersulfone and a polysulfone), a poly(phenylene ether)-series resin (e.g., a polymer of 2,6-xylenol), a cellulose derivative (e.g., a cellulose ester, cellulose carbamate, and a cellulose ether), a silicone resin (e.g., a polydimethylsiloxane and a polymethylphenylsiloxane), and a rubber or an elastomer [e.g., a diene-series rubber (such as a polybutadiene or a polyisoprene), a styrene-butadiene copolymer, an acrylonitrile-butadiene copolymer, an acryl rubber, a urethane rubber, and a silicone rubber].

(Polyfunctional (meth)acrylate)

The polyfunctional (meth)acrylate is a compound having a functional group reacting on heat, an active energy ray (e.g., an ultraviolet ray or an EB (electron beam)), or other means and can be cured or crosslinked with the (meth) acrylic resin having a polymerizable group by heat, the active energy ray, or other means to form a resin (particularly a cured or crosslinked resin).

The functional group of the polyfunctional (meth)acrylate may include an epoxy group, an isocyanate group, an alkoxysilyl group, a silanol group, a polymerizable group (e.g., vinyl group, allyl group, and (meth)acryloyl group), and others. The functional group usually includes a photo-curable group curable in a short time (particularly an ultraviolet-ray-curable group), for example, a radical polymerizable group (e.g., vinyl group, allyl group, and (meth)acryloyl group) or a photosensitive group (e.g., cinnamoyl group). In particular, a radical polymerizable group is preferred.

The polyfunctional (meth)acrylate has at least two (preferably about 2 to 6, and more preferably about 2 to 4) polymerizable unsaturated bonds. The polyfunctional (meth)acrylate may include, for example, an alkylene glycol di (meth)acrylate [e.g., a $C_{2-10}$alkylene glycol di (meth) acrylate such as ethylene glycol di(meth)acrylate, propylene glycol di(meth)acrylate, butanediol di(meth)acrylate, neopentyl glycol di(meth)acrylate, or hexanediol di(meth)acrylate], a polyoxyalkylene glycol di(meth)acrylate [e.g., a (poly)oxyalkylene glycol di(meth)acrylate such as diethylene glycol di(meth) acrylate, dipropylene glycol di(meth)acrylate, or a polyoxytetramethylene glycol di(meth)acrylate], a di(meth)acrylate having a bridged cyclic hydrocarbon group [e.g., tricyclodecanedimethanol di(meth)acrylate and adamantane di(meth) acrylate], and a polyfunctional monomer having about 3 to 6 polymerizable unsaturated bonds [e.g., trimethylolpropane tri(meth)acrylate, trimethylolethane tri(meth)acrylate, pentaerythritol tri(meth)acrylate, pentaerythritol tetra(meth)acrylate, dipentaerythritol penta(meth)acrylate, and dipentaerythritol hexa(meth)acrylate]. Further, the polyfunctional (meth) acrylate may be an oligomer or a resin as long as the polyfunctional (meth)acrylate has not less than two polymerizable unsaturated bonds. For example, the polyfunctional (meth)acrylate may include a (meth)acrylate of an alkylene oxide adduct of bisphenol A, an epoxy (meth)acrylate (e.g., a bisphenol A-based epoxy (meth)acrylate and a novolak-based epoxy (meth)acrylate), a polyester (meth)acrylate (e.g., an aliphatic polyester-based (meth)acrylate and an aromatic polyester-based (meth)acrylate), a (poly)urethane (meth)acrylate (e.g., a polyester-based urethane (meth)acrylate and a polyether-based urethane (meth)acrylate), a silicone (meth)acrylate, and others. These polyfunctional (meth)acrylates may be used alone or in combination. Among these polyfunctional (meth)acrylates, a polyfunctional monomer having about 3 to 6 polymerizable unsaturated bonds, particularly a dipentaerythritol tetra- to hexa(meth)acrylate (e.g., dipentaerythritol hexa(meth)acrylate), is preferred.

The molecular weight of the polyfunctional (meth)acrylate is about not more than 5000, preferably about not more than 2000, and more preferably about not more than 1000, in consideration of the compatibility with the polymer. Incidentally, the lower limit of the molecular weight of the polyfunctional (meth)acrylate is equivalent to the molecular weight of ethylene glycol di(meth)acrylate.

The polyfunctional (meth)acrylate may be used in combination with a curing agent depending on the species thereof. For example, the polyfunctional (meth)acrylate may be used in combination with a curing agent such as an amine or a polyfunctional carboxylic acid (or a polycarboxylic acid) or may be used in combination with a photopolymerization initiator.

The photopolymerization initiator may include a conventional component, e.g., an acetophenone compound, a propiophenone compound, a benzil compound, a benzoin compound, a benzophenone compound, a thioxanthone compound, an acylphosphine oxide compound, and others.

The amount of the curing agent (such as a photo-curing agent) relative to 100 parts by weight of the polyfunctional (meth)acrylate, is about 0.1 to 20 parts by weight, preferably about 0.5 to 10 parts by weight, and more preferably about 1 to 8 parts by weight (particularly about 1 to 5 parts by weight), and may be about 3 to 8 parts by weight.

The polyfunctional (meth)acrylate may contain a curing accelerator or a crosslinking agent. For example, the polyfunctional (meth)acrylate may be used in combination with a photo-curing accelerator, e.g., a tertiary amine (e.g., a dialkylaminobenzoic ester) and a phosphine-series photopolymerization accelerator.

Further, the polyfunctional (meth)acrylate may contain a monofunctional vinyl-series compound [for example, a (meth)acrylic monomer such as a (meth)acrylate, e.g., an alkyl (meth)acrylate (e.g., a $C_{1-6}$alkyl (meth)acrylate such asmethyl(meth)acrylate), a cycloalkyl(meth)acrylate, a (meth)acrylate having a bridged cyclic hydrocarbon group (e.g., isobornyl (meth)acrylate and adamantyl(meth)acrylate), and a glycidyl (meth)acrylate; and a vinyl-series monomer such as a vinyl ester (e.g., vinyl acetate) or vinylpyrrolidone].

(Convection)

In the present invention, a ridge is formed dispersively and in a random direction on a surface of a film by applying (or coating) the coating composition (or the liquid composition) containing the two kinds of (meth)acrylic resins and the polyfunctional (meth)acrylate and raising the surface of the coating film by a convection. In general, because of cooling near the surface of the coating film by vaporization heat which is generated as evaporating the solvent to dryness, a temperature difference between the upper and lower layers of the coating film goes beyond the criticality, as a result the convection is produced (or generated). Such a convection is referred to as Benard convection. Moreover, Benard convection is discovered by Benard and theoretically systematized by Rayleigh, therefore the convection is also referred to as Benard-Rayleigh convection. The critical temperature difference ($\Delta T$) is determined by the thickness of the coating film (d), the coefficient of kinematic viscosity of the coating film (coating composition) (v), the thermal diffusibility of the coating film ($\kappa$), the coefficient of cubical expansion of the coating film ($\alpha$) and the gravitational acceleration (g). The convection is produced when the Rayleigh number (Ra) defined by the following formula exceeds a certain critical value.
$$Ra = (\alpha \cdot g \cdot \Delta T \cdot d^3) / (\kappa \cdot v)$$

The produced convection regularly repeats upstroke and downstroke so that the film has strip domains arranged on a surface thereof at almost regular or periodic intervals, each domain having an irregular shaped projection (or raised portion). It is known that the aspect ratio of the domain (the ratio of the length in the applied (or coated) direction relative to that in the thick direction) is about 2/1 to 3/1.

Moreover, the mode of the convection is not particularly limited to a specific one, and may be other convection mode. For example, the mode of the convection may be Marangoni convection (density convection) due to inhomogeneously distributed surface tension. Marangoni convection means a flow driven by a surface tension difference $\Delta\sigma$. The surface tension generally greatly varies depending on temperature and concentration. Therefore, temperature or concentration gradient in a surface of a coated thin film causes Marangoni flow directed from places of lower surface tension to places of higher surface tension. On the other hand, the solvent evaporation by drying is accompanied by an increase of viscosity resistance, and the increase has an effect in inhibiting Marangoni flow. The critical condition for producing Marangoni convection can be expressed by Marangoni number Ma, which is a ratio of surface tension relative to viscous force. The Marangoni number Ma is given based on the following formula by the temperature (T), the thermal diffusivity of the coating composition ($\alpha$), the thickness of the film (h), and the viscosity ($\mu$). It is known that a vortex convection is produced when the Marangoni number is larger than a critical value Mac. Such a vortex convection is often produced at an early drying stage, at which the thickness of the film is larger and the viscosity is low.
$$Ma = \Delta\sigma h / (\alpha\mu)$$

(Combination of convection and phase separation)

In the present invention, as mentioned above, the uneven surface is formed by producing convection to give convection flow and concentration difference in solid content. Together with such convection, a liquid composition containing the two kinds of (meth) acrylic resins and the polyfunctional (meth)acrylate may be used to phase-separate at least two components of these components and form a phase separation structure. Although the details of mechanism in combination of convection and phase separation are not yet elucidated, the mechanism can be presumed as follows.

By combining convection and phase separation, firstly convection domains are produced after coating. Next, phase separation is developed within each of the convection domains. The phase-separation structure grows to an enormous size with time, and the growth of the phase separation is stopped in the wall of the adjacent convection domain. As a result, the domains are formed at controlled intervals depending on the size and arrangement of the convection domains, and an uneven pattern (or structure) having a good shape and height corresponding to the phase separation structure is formed. That is, an anti-glare film inwhich the shape, arrangement and size of the uneven pattern (or structure) are sufficiently controlled can be obtained.

(Solvent)

In the present invention, the convection or phase separation may be conducted by evaporating the solvent from the liquid composition containing the two kinds of the (meth)acrylic resins and the polyfunctional (meth)acrylate. In particular, among components contained in the liquid composition, the solvent is absolutely necessary to produce convection stably. The reason is that the solvent has an action to lower a surface temperature of a coating film by vaporization heat due to evaporation and further has fluidity to allow the produced convection to be generated without stagnation.

The solvent may be selected depending on the kinds and solubility of the (meth)acrylic resins and polyfunctional (meth)acrylate to be used. In the case of a mixed solvent, it is sufficient that at least one solvent component is a solvent for uniformly dissolving a solid content (the two kinds of the (meth)acrylic resins and the polyfunctional (meth)acrylate, a reaction initiator, other additive(s)). As such a solvent, there may be mentioned, for example, a ketone (e.g., acetone, methyl ethyl ketone, methyl isobutyl ketone, and cyclohexanone), an ether (e.g. , dioxane and tetrahydrofuran), an aliphatic hydrocarbon (e.g., hexane), an alicyclic hydrocarbon (e.g., cyclohexane), an aromatic hydrocarbon (e.g., benzene and toluene), a carbon halide (e.g., dichloromethane and dichloroethane), an ester (e.g., methyl acetate and ethyl acetate), water, an alcohol (e.g., ethanol, isopropanol, butanol, and cyclohexanol), a cellosolve (e.g., methyl cellosolve and ethyl cellosolve), a cellosolve acetate, and an amide (e.g., dimethylformamide and dimethyhlacetamide). These solvents may be used alone or in combination.

Incidentally, Japanese Patent Application Laid-Open No.126495/2004 (JP-2004-126495A) discloses, the same as the present invention, a process for producing a sheet, which comprises evaporating a solvent from a liquid composition containing at least one polymer and at least one curable resin precursor uniformly dissolved in the solvent. In the process, an anti-glare layer is produced by spinodal decomposition under an appropriate condition and then curing of the precursor. Although this document discloses a process for forming an uneven surface of the anti-glare sheet by phase separation due to spinodal decomposition, there is no description of convection.

In the present invention, in order to produce such a convection domain, as a solvent, it is preferred to use a solvent having a boiling point of not lower than 100°C at an atmospheric pressure. Further, to produce the convection cell, the solvent preferably comprises at least two solvent components with different boiling points. Moreover, when two solvent components with different boiling point are used, the boiling point of the solvent component having a higher boiling point may be not lower than 100°C and is usually about 100 to 200°C, preferably about 105 to 150°C and more preferably about 110 to 130°C. In particular, from the viewpoint of using in combination of convection cell and phase separation, the solvent preferably comprises at least one solvent component having a boiling point of not lower than 100°C and at least one solvent component having a boiling point of lower than 100°C in combination. In the case of using such a mixed solvent, the solvent component having a lower boiling point generates a temperature difference between the upper and lower layers of the coating film due to evaporation, and the solvent component having a higher boiling point remains in the coating film resulting in keeping of fluidity.

The solvent (or solvent component) having a boiling point of not lower than 100°C at an atmospheric pressure may include, for example, an aromatic hydrocarbon (e.g., toluene and xylene), an alcohol (e.g. , a $C_{4-8}$alkyl alcohol such as butanol, pentyl alcohol, or hexyl alcohol), an alkoxy alcohol (e.g., a $C_{1-6}$alkoxy$C_{2-6}$alkyl alcohol such as methoxyethanol, methoxypropanol, or butoxyethanol), an alkylene glycol (e.g., a $C_{2-4}$alkylene glycol such as ethylene glycol or propylene glycol), aketone (e.g., cyclohexanone), and a sulfoxide (e.g., dimethylsulfoxide). These solvents may be used alone or in combination. Among them, a $C_{4-8}$alkyl alcohol such as n-butanol, a $C_{1-6}$alkoxy$C_{2-6}$alkyl alcohol such as methoxypropanol or butoxyethanol, and a $C_{2-4}$alkylene glycol such as ethylene glycol are preferred.

The preferred combination may include, for example, a combination of a solvent having a boiling point of not lower than 100°C (e.g., an alcohol (such as n-butanol) and an alkoxy alcohol (such as methoxypropanol)) and a solvent having a boiling point of lower than 100°C (a low boiling point solvent, e.g., a ketone such as acetone or methyl ethyl ketone). In addition to the above-mentioned ketone, the solvent having a boiling point of lower than 100°C (the low boiling point solvent) may include a $C_{1-3}$alkanol (e.g., ethanol and isopropanol), a nitrile (e.g., acetonitrile), a halogenated $C_{1-3}$alkane (e.g., dichloromethane and dichloroethane), an ether (e.g., isopropyl ether or dimethoxyethane), a $C_{1-3}$alkyl acetate (e.g. , ethyl acetate), an aliphatic hydrocarbon (e.g., hexane, cyclopentane, and cyclohexane), and others. Incidentally, the boiling point of the low boiling point solvent may be, for example, about 50 to 95°C, preferably about 55 to 90°C, and more preferably about 60 to 85°C (e.g., about 65 to 80°C).

The ratio of the solvent components with different boiling points is not particularly limited to a specific one. In the case of using a solvent component having a boiling point of not lower than 100°C (a first solvent component) in combination with a solvent component having a boiling point lower than 100°C (a second solvent component), the ratio of the first solvent component relative to the second component (when each of the first and second solvent components comprises a plurality of components, the ratio is defined as a weight ratio of the total first solvent components relative to the total second solvent components) may be, for example, about 10/90 to 70/30, preferably about 10/90 to 50/50, and more preferably about 15/85 to 40/60 (particularly about 20/80 to 40/60).

Moreover, when a liquid mixture or a coating composition is applied (or coated) on a transparent support, a solvent which does not dissolve, corrode or swell the transparent support may be selected according to the kinds of the transparent support. For example, when a triacetylcellulose film is employed as the transparent support, tetrahydrofuran, methyl ethyl ketone, isopropanol, toluene or the like is used as a solvent for the liquid mixture or the coating composition and thus the anti-glare film can be formed without deteriorating properties of the film.

In the present invention, at least two components of the two kinds of the (meth)acrylate-series resins and the polyfunctional (meth)acrylate are phase-separated from each other in the neighborhood of a processing temperature. When both components to be phase-separated are excessively less compatible with each other, the anti-glare film has a dense structure in which the distance between convection domains produced in the solvent evaporation process is short. Therefore, it is difficult to apply a low-refraction-index layer uniformly on a surface of the anti-glare film. Incidentally, the nonreactive (meth)acrylic resin and the polyfunctional (meth)acrylate are, usually, fully incompatible or weakly (or slightly) compatible with each other.

The polyfunctional (meth)acrylate is compatible with the reactive (meth)acrylate-series resin having a polymerizable group in the neighborhood of a processing temperature. Further, when the polyfunctional (meth)acrylate is also compatible with the nonreactive (meth)acrylic resin, at least two phases which are phase-separated from each other may be obtained, one phase comprises a mixture containing the reactive (meth)acrylic resin having a polymerizable group and the polyfunctional (meth)acrylate as main components and another phase comprises a mixture containing the nonreactive (meth)acrylic resin and the polyfunctional (meth)acrylate as main components. Also in this case, when the two kinds of the (meth)acrylic resins are excessively less compatible with each other, the anti-glare film has a dense structure in which the distance between convection domains produced in the solvent evaporation process is short. Therefore, it is difficult to apply a low-refraction-index layer uniformly on a surface of the anti-glare film.

When the two kinds of the (meth)acrylic resins are incompatible with each other, combination of at least one (meth)acrylic resin and the polyfunctional (meth)acrylate compatible with each other in the neighborhood of a processing temperature is used. That is, the polyfunctional (meth)acrylate may be compatible with at least one (meth)acrylic resin, and may preferably be compatible with both of the (meth)acrylic resins. When the polyfunctional (meth)acrylate is compatible with both of the (meth)acrylic resins, at least two phases which are phase-separated from each other are obtained, one phase comprises a mixture containing the nonreactive (meth)acrylic resin and the polyfunctional (meth) acrylate as main components and another phase comprises a mixture containing the reactive (meth)acrylic resin and the polyfunctional (meth)acrylate as main components.

Incidentally, each of the polymer phase separability of the (meth)acrylic resins and the phase separability of the (meth)acrylic resin and the polyfunctional (meth)acrylate can conveniently be evaluated as follows: a good solvent for each component is used to prepare a uniform liquid composition, and whether the residual solid matter becomes clouded or not in the step for gradual evaporation of the solvent is visually conformed.

Further, the nonreactive (meth)acrylic resin and the cured or crosslinked resin obtained by curing the reactive (meth)acrylic resin and the polyfunctional (meth)acrylate are usually different from each other in refraction index. Moreover, the nonreactive (meth)acrylic resin and the reactive (meth)acrylic resin are also different from each other in refraction index. The difference in refraction index between the nonreactive (meth)acrylic resin and the cured or crosslinked resin and the difference in refraction index between the nonreactive (meth)acrylic resin and the reactive (meth)acrylic resin may be, for example, about 0.001 to 0.2 and preferably about 0.05 to 0.15.

The bicontinuous phase structure is formed along with the progress of the phase separation. Further proceeding of the phase separation makes the continuous phase discontinuous owing to its own surface tension to change into the droplet phase structure (e.g., an islands-in-the-sea structure containing independent phases such as ball-like shape, spherical shape, discotic shape, or oval-sphere shape). Therefore, an intermediate structure of the bicontinuous phase structure and the droplet phase structure (i.e., a phase structure in a transitional state from the bicontinuous phase to the droplet phase) can also be formed depending on the degree of phase separation. The phase-separation structure in the anti-glare film according to the present invention may be an islands-in-the-sea structure (a droplet phase structure, or a phase structure in which one phase is independent or isolated) or a bicontinuous phase structure (or a mesh structure), or may be an intermediate structure being a coexistent state of a bicontinuous phase structure and a droplet phase structure. The phase-separation structure realizes the formation of a finely uneven (convex and concave) structure on the surface of the obtained anti-glare film after drying of the solvent.

In the phase-separation structure, it is advantageous that the structure forms a droplet phase structure having at least an island domain in view of forming the uneven surface structure and of improving the surface hardness. Incidentally, when the phase-separation structure comprising the nonreactive (meth)acrylic resin and the cured or crosslinked resin forms an islands-in-the-sea structure, the nonreactive (meth)acrylic resin component may form the sea phase. It is, however, advantageous in view of surface hardness that the nonreactive (meth)acrylic resin component forms island domains. The formation of the island domains realizes a finely uneven structure of the surface after drying the anti-glare layer.

The ratio (weight ratio) of the total amount of the nonreactive (meth)acrylic resin and the reactive (meth)acrylic resin (the amount of the polymer components) relative to the polyfunctional (meth)acrylate is not particularly limited to a specific one. For example, the ratio (the former/the latter) is about 5/95 to 95/5, preferably about 10/90 to 90/10, and more preferably about 20/80 to 80/20 (particularly about 30/70 to 70/30).

The ratio of the reactive (meth)acrylic resin having a polymerizable group relative to the polyfunctional (meth) acrylate is not particularly limited to a specific one. For example, the molar ratio of the reactive group of the reactive (meth)acrylic resin relative to that of the polyfunctional (meth)acrylate may be adjusted to be 1 (for example, 0.5 to 1.5 and preferably 0.8 to 1.2). Further, the ratio of the total amount of the reactive (meth)acrylic resin having a polymerizable group and the polyfunctional (meth)acrylate (the curable resin precursor components) relative to the nonreactive (meth) acrylic resin is not particularly limited to a specific one. The ratio (the former/the latter) may be selected from the range of about 99.9/0.1 to 10/90, and, for example, may be about 99/1 to 30/70 (particularly about 98/2 to 50/50). Moreover, the proportion of the nonreactive (meth)acrylic resin in all components (solid content) is, for example, about 1 to 60% by weight, preferably about 3 to 30% by weight, and more preferably about 4 to 15% by weight.

(Viscosity and concentration of liquid composition)

According to the present invention, in production of convection, it is preferable that the viscosity of the liquid composition be moderately high for maintaining the uneven surface due to convection, and it is preferable that the viscosity of the liquid composition be moderately low for producing convection without stagnation. In order to ensure such a viscosity of the liquid composition, the solid content of the liquid composition may be, for example, about 5 to 50% by weight, preferably about 10 to 50% by weight, and more preferably about 15 to 40% by weight.

(Coating thickness)

In order to produce convection domain with a desired size, the coating thickness of the liquid composition (or coating composition) may be, for example, about 20 to 200 $\mu$m, preferably about 20 to 100 $\mu$m, and more preferably about 20 to 50 $\mu$m. For example, an uneven surface (or uneven pattern) in which the distance between adjacent projections (specifically, the length of a depression as the flat area between adjacent projections) is about 50 $\mu$m can be obtained by applying the liquid composition on the transparent support at a coating thickness of about 20 to 50 $\mu$m. The thickness of the coating film becomes thin due to evaporation of part of the solvent (or solvent component) with a lower boiling point in the liquid composition, and concurrently the evaporation generates a temperature difference between the upper and the lower layers of the coating film, as a result, convection having a size of about 50 $\mu$m can be produced.

(Drying temperature)

It is preferable that the convection and phase separation be induced by casting or applying (or coating) the liquid composition (or coating composition), and then evaporating the solvent at a temperature lower than the boiling point of the solvent [for example, at a temperature lower than a boiling point of a solvent having a higher boiling point by about 1 to 120°C (preferably about 5 to 80°C and particularly about 10 to 60°C)]. For example, depending on the boiling point of the solvent, the coating film may be dried at a temperature of about 30 to 200°C (e.g., about 30 to 100°C), preferably about 40 to 120°C and more preferably about 40 to 80°C.

In particular, in order to produce convection, after casting or applying (or coating) the liquid composition on the support, it is not preferable that the coating film be immediately put in a dryer such as an oven for dryness, but preferable that the coating film be put in a dryer after allowing the coating film to stand for a predetermined time (e.g., for about 1 second to 1 minute, preferably about 3 to 30 seconds and more preferably about 5 to 20 seconds) at an ambient temperature or room temperature (e.g. , about 0 to 40°C and preferably about 5 to 30°C). Moreover, the dry air flow rate is not particularly limited to a specific one. In the case where the air flow rate is too high, the coating film is dried and solidified before enough production of convection. Accordingly, it is preferable that the drying be conducted at a dry air flow rate of not higher than 50 m/minute (e.g., about 1 to 50 m/minute), preferably about 1 to 30 m/minute and more preferably about 1 to 10 m/minute. The angle of the dry wind blown against the anti-glare film is not particularly limited to a specific one. For example, the angle may be parallel or perpendicular to the film.

(Curing treatment)

After drying the liquid composition, the coating film is cured or crosslinked by heat or an active energy ray (e.g.,

an ultraviolet ray, and an electron beam). The curing process may be selected depending on the species of the curable resin precursor component, and a curing process by light irradiation such as an ultraviolet ray or an electron beam is usually employed. The general-purpose light source for exposure is usually an ultraviolet irradiation equipment. If necessary, light irradiation may be carried out under an inert (or inactive) gas atmosphere.

(Properties of anti-glare film)

The anti-glare film obtainable by such a process has a ridge (or a ridged strip, a ribbon-like projection) formed dispersively and in a random direction on a surface thereof at a relatively controlled interval depending on the arrangement of the convection domain by convection along with the phase separation of a plurality of polymers. The shape of each ridge (two-dimensional structure of the film surface) is usually an almost straight line or a strip having a curved line partially or wholly. The ridges may partially be overlapped each other to form an elliptical shape or a crossed shape. Since such ridges are dispersed evenly over the film surface and forms a partially continuous structure as mentioned above, it is observed that the film surface has a two-dimensional network structure (like a net-like pattern of the rind of muskmelon). Incidentally, it is sufficient that such ridges form a roughly network structure. The ridges usually form a mixed structure containing a continuous portion and a noncontinuous portion.

The average height of the ridge is, for example, about 0.05 to 10 $\mu$m, preferably about 0.1 to 5 $\mu$m, and more preferably about 0.3 to 3 $\mu$m (particularly about 0.5 to 2 $\mu$m). The average width of the ridge is, for example, about 0.1 to 30 $\mu$m, preferably about 1 to 20 $\mu$m, and more preferably about 3 to 15 $\mu$m (particularly about 5 to 10 $\mu$m). With respect to each of the height and width of the ridge, an excessive large height or width deteriorates the adaptability to the low-refraction-index layer. On the other hand, an excessive small height or width decreases the anti-glareness.

According to the present invention, since a specific (meth)acrylic resin is selected to produce (or generate) phase separation and convection, the area upheaved (or raised) by convection becomes in the form of such a ridge and accounts for a small proportion of the area of the film surface. Concretely, the total area of the ridges is not more than 50% (for example, about 1 to 50%), preferably about 10 to 48%, and more preferably about 20 to 45% (particularly about 30 to 45%) of the whole surface area of the film. Since the total area of the ridges accounts for such a small proportion in the area of the film surface, the anti-glare film of the present invention has a large proportion of the flat area formed as the depression, which improves the adaptability to the low-refraction-index layer of the anti-glare film. Incidentally, in the present invention, the area of the ridge is determined based on not a surface area of the three-dimensional ridge but a two-dimensionally area thereof observed by means of microphotography.

Further, the ridge may have a depression (or a depressedportion, ahollow) on a surface thereof. The shape of the depression or the number of depressions is not particularly limited to a specific one. Usually a depressed strip (or depressed ribbon-like portion) depending on the shape of the corresponding ridge is formed. That is, the depressed strip may be formed along the longitudinal direction of the corresponding ridge, and both sides of the ridge may be formed as a bank (embankment or raised strip) extending in the longitudinal direction. Although it is not known exactly why such a depression is formed, the depression is formed while raising the ridge accompanying the phase separation and the convection. Since such a depression makes the intervals of the ridges of the domain more equal to form an uneven structure having raised portions at uniform intervals formed thereon, it is particularly preferable. Incidentally, it is unnecessary that the depression be formed depending on the shape of the ridge. For example, a dotted (or dot-like) depression may be formed.

The average depth of the depression is, for example, about 0.001 to 5 $\mu$m, preferably about 0.005 to 3 $\mu$m, and more preferably about 0.01 to 2 $\mu$m (particularly about 0.1 to 1 $\mu$m).

The raised portion and depression formed by convection usually has substantial regularity or periodicity with respect to the distance. For example, the mean distance between two adjacent raised portions (or projections) (Sm) may be about 10 to 300 $\mu$m, and is preferably about 25 to 250 $\mu$m and more preferably about 30 to 200 $\mu$m. The mean distance between two adjacent raised portions (Sm) is, for example, controllable by the thickness of the coated layer when convection is produced.

The total light transmittance of the anti-glare film is, for example, about 70 to 100%, preferably about 80 to 100%, more preferably about 85 to 100% (e.g., about 85 to 95%), and particularly about 90 to 100% (e.g. , about 90 to 99%).

The haze of the anti-glare film is, for example, about 0.5 to 50%, preferably about 1 to 40%, and more preferably about 2 to 35%. Moreover, when the after-mentioned low-refraction-index layer is applied (or coated) on the anti-glare film, the haze is usually about 1 to 10% lower than that of the anti-glare film alone. The haze of the combination of the anti-glare film and the low-refraction-index layer is, for example, about 0.5 to 30%, preferably about 1 to 25%, and more preferably 1 to 20%, and usually about 1 to 10%. For forming the low-refraction-index layer, it is preferable that the haze of the anti-glare film be adjusted in consideration to the drop in haze.

The haze and the total light transmittance can be measured using a NDH-300A haze meter (manufactured by Nippon Denshoku Industries Co., Ltd.) in accordance with JIS (Japanese Industrial Standards) K7105.

When an optical slit of 0.5 mm width is used, the transmitted image clarity of the anti-glare film may be selected from the range of about 10 to 100%, and is preferably not less than 10% to less than 90% and more preferably about 20 to 80%.

The transmitted image clarity is a measure for quantifying defocusing or distortion of a light transmitted through a film. The transmitted image clarity is obtained by measuring a transmitted light from a film through amovable optical slit, and calculating amount of light in both a light part and a dark part of the optical slit. That is, in the case where a transmitted light is defocused by a film, the slit image formed on the optical slit becomes thicker, and as a result the amount of light in the transmitting part is not more than 100%. On the other hand, in the non-transmitting part, the amount of light is not less than 0% due to leakage of light. The value C of the transmitted image clarity is defined by the following formula according to the maximum value M of the transmitted light in the transparent part of the optical slit, and the minimum value m of the transmitted light in the opaque part thereof.

$$C(\%) = [(M-m)/(M+m)] \times 100$$

That is, the closer the value C comes to 100%, the lower the image defocusing depending on the anti-glare film becomes. [reference; Suga and Mitamura, Tosou Gijutsu, July, 1985].

As an apparatus for measuring the transmitted image clarity, there may be used an image clarity measuring apparatus ICM-1DP (manufactured by Suga Test Instruments Co. , Ltd.). As the optical slit, there may be used an optical slit of 0.125 mm to 2 mm width.

As the surface roughness of the anti-glare film, the centerline average roughness (Ra) is, for example, 0.01 to 0.25 $\mu$m, preferably about 0.01 to 0.2 $\mu$m, and more preferably about 0.02 to 0.15 $\mu$m. Moreover, when the low-refraction-index layer is applied (or coated) on the anti-glare film, it is preferable that a film having the coated low-refraction-index layer have a centerline average roughness in this range.

In order to impart a suitable hardcoat property and uneven surface structure to the anti-glare film, the thickness of the film may be, for example, about 0.3 to 25 $\mu$m and preferably about 1 to 20 $\mu$m (e.g., about 1 to 18 $\mu$m), and is usually about 6 to 15 $\mu$m (particularly about 8 to 15 $\mu$m). Incidentally, for the anti-glare film alone without a support, the thickness of the anti-glare film may be, for example, about 1 to 100 $\mu$m, preferably about 2 to 70 $\mu$m, and more preferably about 3 to 50 $\mu$m.

[Anti-glare sheet]

A non-separable (or non-releasable) support (preferably a transparent support) can be used as a support for the anti-glare film to obtain an anti-glare sheet having a lamination structure comprising the support and the anti-glare film formed thereon. Moreover, a low-refraction-index layer (thin layer) can be formed on the anti-glare film of the anti-glare sheet. Further, an anti-glare sheet having a lamination structure comprising an anti-glare layer and a low-refraction-index layer can also be obtained by laminating the low-refraction-index layer on the anti-glare sheet and then separating the support from the anti-glare sheet or by separating the anti-glare sheet from the support and then laminating the low-refraction-index layer on the anti-glare layer. As the support, there may be used a support having light transmittance properties, for example, a transparent support such as a synthetic resin film. Moreover, the support having light transmittance properties may comprise a transparent polymer film for forming an optical member.

(Transparent support)

As the transparent support (or substrate sheet), there may be exemplified a resin sheet in addition to glass and ceramics. As a resin constituting the transparent support, the resin similar to that of the above-mentioned anti-glare layer may be used. The preferred transparent support may include a transparent polymer film, for example, a film formed with a cellulose derivative [e.g., a cellulose acetate such as a cellulose triacetate (TAC) or a cellulose diacetate], a polyester-series resin [e.g., a polyethylene terephthalate (PET), a polybutylene terephthalate (PBT), and a polyarylate-series resin], a polysulfone-series resin [e.g., a polysulfone, and a polyether sulfone (PES)], a polyether ketone-series resin [e.g., a polyether ketone (PEK), and a polyether ether ketone (PEEK)], a polycarbonate-series resin (PC), a polyolefinic resin (e.g., a polyethylene, and a polypropylene), a cyclic polyolefinic resin (e.g., ARTON, ZEONEX), a halogen-containing resin (e.g., a polyvinylidene chloride), a (meth)acrylic resin, a styrenic resin (e.g., a polystyrene), a vinyl acetate-or vinyl alcohol-series resin (e.g., a polyvinyl alcohol) and others. The transparent support may be stretched monoaxially or biaxially, and the transparent support having optical isotropy is preferred. The preferred transparent support includes a support sheet or film having a low birefringence index. The optically isotropic transparent support may include a non-stretched sheet or film, and for example, may include a sheet or film formed from a polyester (e.g., a PET, and a PBT), a cellulose ester, in particular a cellulose acetate (e.g., a cellulose acetate such as a cellulose diacetate or a cellulose triacetate, and an ester of a cellulose acetate with a $C_{3-4}$ organic acid, such as a cellulose acetate propionate or a cellulose acetate butyrate) or the like. The thickness of the support having a two-dimensional structure may be selected within the range of, for example, about 5 to 2000 $\mu$m, preferably about 15 to 1000 $\mu$m, and more preferably about 20 to 500 $\mu$m.

(Low-refraction-index layer)

The material of the low-refraction-index layer is not particularly limited to a specific one. The low-refraction-index layer may comprise a resin component, an inorganic or organic particle, or a combination thereof. The low-refraction-index layer usually comprises a low-refraction-index resin. When the low-refraction-index layer laminated on at least one side of the anti-glare layer is disposed as an outermost layer of the anti-glare sheet for an optical member or the like, the reflection of a light [e.g., a light source around the optical member (such as an ambient light or an external light source)] from the surface of the anti-glare sheet can effectively be prevented.

The refraction index of the low-refraction-index resin is, for example, about 1.20 to 1.49, preferably about 1.25 to 1.47, and more preferably about 1.30 to 1.45.

The low-refraction-index resin may include, for example, a methylpentene resin, a diethylene glycol bis (allyl carbonate) resin, and a fluorine-containing resin such as a poly (vinylidene fluoride) (PVDF) or a poly (vinyl fluoride) (PVF). Moreover, it is usually preferable that the low-refraction-index layer contain a fluorine-containing compound. The fluorine-containing compound can desirably reduce the refraction index of the low-refraction-index layer.

The fluorine-containing compound may include a fluorine-containing resin precursor which has a fluorine atom and a reactive functional group (e.g., a curable group such as a crosslinkable group or a polymerizable group) by heat or an active energy ray (e.g., an ultraviolet ray or an electron beam) or the like and which can be cured or crosslinked by heat or an active energy ray or the like to form a fluorine-containing resin (particularly a cured or crosslinked resin).

Examples of such a fluorine-containing resin precursor may include a fluorine atom-containing thermosetting compound or resin [a low molecular weight compound which has a fluorine atom, and a reactive group (e.g., an epoxy group, an isocyanate group, a carboxyl group, and a hydroxyl group), a polymerizable group (e.g., a vinyl group, an allyl group, and a (meth)acryloyl group) or others], a fluorine atom-containing photo-curable compound or resin which is curable by an active ray (or light) such as an ultraviolet ray (for example, an ultraviolet ray-curable compound such as a photo-curable fluorine-containing monomer or oligomer), and others.

As the thermosetting compound or resin, there may be mentioned, for example, a low molecular weight resin obtainable by using at least a fluorine-containing monomer, e. g. , an epoxy-series fluorine-containing resin obtainable by using a fluorine-containing polyol (particularly a diol) instead of part or all of polyol components as a constituting monomer; in the same way, an unsaturated polyester-series fluorine-containing resin obtainable by using a fluorine atom-containing polyol and/or fluorine atom-containing polycarboxylic acid component instead of part or all of polyol and/or polycarboxylic acid component(s); a urethane-series fluorine-containing resin obtainable by using a fluorine atom-containing polyol and/or polyisocyanate component instead of part or all of polyol and/or polyisocyanate component(s); and others. These thermosetting compounds or resins may be used alone or in combination.

The photo-curable compound may include, for example, a monomer, an oligomer (or a resin, in particular a low molecular weight resin). Examples of the monomer may include a fluorine atom-containing monomer corresponding to the monofunctional monomer and polyfunctional monomer exemplified in the paragraph of the anti-glare layer mentioned above [e.g., a monofunctional monomer such as a fluorine atom-containing (meth)acrylic monomer (such as a fluorinated alkyl ester of (meth)acrylic acid), or a vinyl-series monomer (such as a fluoroolefin); and a di(meth)acrylate of a fluorinated alkylene glycol such as 1-fluoro-1,2-di(meth)acryloyloxyethylene]. Moreover, a fluorine atom-containing oligomer or resin corresponding to the oligomer or resin exemplified in the paragraph of the anti-glare layer may be used as the oligomer or resin. These photo-curable compounds may be used alone or in combination.

The curable precursor for the fluorine-containing resin is, for example, available in the form of a liquid composition (liquid coating composition). For example, such a liquid coating composition may be available as "TT1006A" and "JN7215" manufactured by JSR Corporation, "DEFENSATR-330" manufactured by Dainippon Ink and Chemicals, Inc., or others.

The thickness of the low-refraction-index layer is, for example, about 0.04 to 2 $\mu$m, preferably about 0.06 to 0.5 $\mu$m, and more preferably about 0.08 to 0.3 $\mu$m.

[Optical member]

The anti-glare film has uniform and high-definition anti-glareness because of having an uneven surface in which the size of each ridge and the distance between two adjacent ridges are almost uniformly controlled by convection. Further, the anti-glare film has a high abrasion resistance (hardcoat property) and can control an intensity distribution of a transmitted scattered-light. In particular, the anti-glare sheet makes a scattered intensity at a particular angle range larger with allowing a transmitted light to transmit and scatter isotropically. Further, the anti-glare sheet has an excellent clearness (or sharpness) of a transmitted image, and reduces blur of characters in a display surface (or visual surface). Moreover, in the case of forming a low-refraction-index layer on the anti-glare film, reflection of an external light can efficiently be inhibited in the surface of the low-refraction-index layer. Therefore, the anti-glare film of the present invention is suitable for application of an optical member or others, and the above-mentioned support may also comprise a transparent polymer film for forming various optical members. The anti-glare sheet obtained in combination with the transparent polymer film may be directly used as an optical member, or may form an optical member in combination with an optical element [for example, a variety of optical elements to be disposed into a light path, e.g., a polarizing plate, an optical retardation plate (or phase plate), and a light guide plate (or light guide)]. That is, the anti-glare sheet may be disposed or laminated on at least one light path surface of an optical element. For example, the anti-glare sheet may be laminated on at least one surface of the optical retardation plate, or may be disposed or laminated on an output surface (or emerge surface) of the light guide plate.

The anti-glare sheet having imparted abrasion resistance can be also performed as a protective film. The anti-glare sheet of the present invention is, therefore, suitable for utilizing as a laminate (optical member) in which the anti-glare sheet is used instead of at least one protective film among two protective films for a polarizing plate, that is, as a laminate (optical member) in which the anti-glare sheet is laminated on at least one surface of a polarizing plate.

[Display apparatus]

The anti-glare film and the anti-glare sheet of the present invention can be utilized for various display apparatuses or devices such as a liquid crystal display (LCD) apparatus, a plasma display, and a touch panel-equipped display device. These display apparatuses comprise the anti-glare sheet or the optical member (particularly, e.g. , a laminate of a polarizing plate and an anti-glare sheet) as an optical element. In particular, the anti-glare sheet can be preferably used for a liquid crystal display apparatus and others because the anti-glare sheet can inhibit reflected glare even in the case of being attached to a large-screen liquid crystal display apparatus such as a high-definition or high-definitional liquid crystal display.

Incidentally, the liquid crystal display apparatus may be a reflection-mode liquid crystal display apparatus using an external light (or outside light) for illuminating a display unit comprising a liquid crystal cell, or may be a transmission-mode (or transmissive) liquid crystal display apparatus comprising a backlight unit for illuminating a display unit. In the reflection-mode liquid crystal display apparatus, the display unit can be illuminated by taking in an incident light from the outside through the display unit, and reflecting the transmitted incident light by a reflective member. In the reflection-mode liquid crystal display apparatus, the anti-glare sheet or optical member (particularly a laminate of a polarizing plate and the anti-glare sheet) can be disposed in a light path in front of the reflective member. For example, the anti-glare sheet or optical member can be disposed or laminated, for example, between the reflective member and the display unit, or in front of the display unit.

In the transmission-mode liquid crystal display apparatus, the backlight unit may comprise a light guide plate (e. g. , a light guide plate having a wedge-shaped cross section) for allowing a light from a light source (e.g., a tubular light source such as a cold cathode tube, a point light source such as a light emitting diode) incident from one side of the light guide plate and for allowing the incident light to emit from the front output (or emerge) surface. Moreover, if necessary, a prism sheet may be disposed in front of the light guide plate. Incidentally, a reflective member for allowing a light obtained from the light source to reflect to the output surface side is usually disposed on the reverse side of the light guide plate. In such a transmission-mode liquid crystal display apparatus, the anti-glare sheet or the optical member may usually be disposed or laminated into a light path in front of the light source. For example, the anti-glare sheet or optical member can be disposed or laminated between the light guide plate and the display unit, in front of the display unit, or others.

INDUSTRIAL APPLICABILITY

The present invention is useful for a variety of application in need of anti-glareness and light-scattering properties, e.g., for the optical member or an optical element of a display apparatus such as a liquid crystal display apparatus (in particular, a high-definition or high-definitional display apparatus).

EXAMPLES

Hereinafter, the following examples are intended to describe this invention in further detail and should by no means be interpreted as defining the scope of the invention.

Example 1

In a mixture containing 20.1 parts by weight of methyl ethyl ketone (MEK) (boiling point: 80°C), 5.4 parts by weight of 1-butanol (BuOH) (boiling point: 113°C), and 1.89 parts by weight of 1-methoxy-2-propanol (boiling point: 119°C) were dissolved 5.65 parts by weight of an acrylic resin having a polymerizable unsaturated group(s) in a side chain thereof [weight-average molecular weight: 25,000, a compound in which 3,4-epoxycyclohexenylmethyl acrylate is added to one or some of carboxyl group(s) in a (meth) acrylic acid-(meth)acrylate copolymer; manufactured by Daicel Chemical Industries, Ltd., CYCLOMER-P (ACA) 320M, solid content: 49.6% by weight, and solvent: 1-methoxy-2-propanol (MMPG) (boiling point: 119°C)], 0.9 parts by weight of a poly(methyl methacrylate) (PMMA) (weight-average molecular weight: 480000; manufactured by Mitsubishi Rayon Co., Ltd., BR88), 6.3 parts by weight of a polyfunctional acrylic UV-curable monomer (dipentaerythritol hexaacrylate; manufactured by Daicel UCB Co., Ltd., DPHA), and 0.5 parts by weight of a photo initiator (manufactured by Ciba Specialty Chemicals K.K., IRGACURE 184). Incidentally, the PMMA and the acrylic resin having a polymerizable unsaturated group (s) are not fully compatible with each other, and a low phase separation appears with the concentration of this liquid coating composition. The coating composition was cast on a triacetylcellulose film with the use of a wire bar #24, and then allowed to stand for 10 seconds at a room temperature. The film was immediately put in an explosion-proof oven at 70°C at a wind speed of 3 m/minute and held for 5 seconds, and a convection cell while evaporating the solvent was produced. The coated layer was further dried in the oven for 2 minutes. Thereby a phase separation structure was generated in a convection cell, and an about 9 $\mu$m thick coat layer having an uneven surface structure was formed. Then, the coat layer was subjected to UV curing treatment for about 30 seconds by irradiating ultraviolet ray derived from a metal halide lamp (manufactured by Eyegraphics Co., Ltd.) to form an anti-glare sheet having hardcoat property and an uneven surface structure.

Example 2

A coating composition containing a thermosetting fluorine-containing compound ("LR204-6" manufactured by Nissan Chemical Industries, Ltd., solid content: 1% by weight) for a low refraction index layer was applied on the anti-glare sheet obtained in Example 1 with the use of a wire bar #5. The coated product was dried, and then hot-cured (or heat-cured) at 90°C for 5 minutes to give a low-reflection anti-glare sheet.

Example 3

In a mixture containing 36.8 parts by weight of MEK (boiling point: 80°C) and 7.73 parts by weight of 1-butanol (boiling point: 113°C) were dissolved 5.24 parts by weight of an acrylic resin having a polymerizable unsaturated group (s) in a side chain thereof [a compound in which 3,4-epoxycyclohexenylmethyl acrylate is added to one or some of carboxyl group(s) in a (meth)acrylic acid-(meth)acrylate copolymer; manufactured by Daicel Chemical Industries, Ltd., CYCLOMER-P (ACA) 320M, solid content: 49.6% by weight, and solvent: 1-methoxy-2-propanol (MMPG) (boiling point: 119°C)], 0.9 parts by weight of a poly(methyl methacrylate) (PMMA) (weight-average molecular weight: 480000; manufactured by Mitsubishi Rayon Co., Ltd., BR88), 6.5 parts by weight of a polyfunctional acrylic UV-curable monomer (manufactured by Daicel UCB Co., Ltd., DPHA), and 0.5 parts by weight of a photo initiator (manufactured by Ciba Specialty Chemicals K.K., IRGACURE 184). Incidentally, the PMMA and the acrylic resin having a polymerizable unsaturated group(s) are not fully compatible with each other, and a low phase separation appears with the concentration of this liquid coating composition. The coating composition was cast on a triacetylcellulose film with the use of a wire bar #34, and then allowed to stand for 10 seconds at a room temperature. The film was immediately put in an explosion-proof oven at 60°C at a wind speed of 3 m/minute and held for 5 seconds, and a convection cell while evaporating the solvent was produced. The coated layer was further dried in the oven for 2 minutes. Thereby a phase separation structure was generated in a convection cell, and an about 9 $\mu$m thick coat layer having an uneven surface structure was formed. Then, the coat layer was subjected to UV curing treatment for about 30 seconds by irradiating ultraviolet ray derived from a metal halide lamp (manufactured by Eyegraphics Co., Ltd.) to form an anti-glare sheet having hardcoat property and an uneven surface structure.

Example 4

A coating composition containing a thermosetting fluorine-containing compound ("LR204-6" manufactured by Nissan Chemical Industries, Ltd., solid content: 1% by weight) for a low refraction index layer was applied on the anti-glare sheet obtained in Example 3 with the use of a wire bar #5. The coated product was dried, and then hot-cured (or heat-cured) at 90°C for 5 minutes to give a low-reflection anti-glare sheet.

Comparative Example 1

In a mixture containing 20.1 parts by weight of methyl ethyl ketone (MEK) (boiling point: 80°C), 5.4 parts by weight of 1-butanol (BuOH) (boiling point: 113°C), and 1.89 parts by weight of 1-methoxy-2-propanol (boiling point: 119°C) were dissolved 5.65 parts by weight of an acrylic resin having a polymerizable unsaturated group (s) in a side chain thereof [a compound in which 3,4-epoxycyclohexenylmethyl acrylate is added to one or some of carboxyl group (s) in a (meth)acrylic acid-(meth)acrylate copolymer; manufactured by Daicel Chemical Industries, Ltd., CYCLOMER-P (ACA) 320M, solid content: 49.6% by weight, and solvent: 1-methoxy-2-propanol (MMPG) (boiling point: 119°C)], 0.9 parts by weight of a cellulose acetate propionate (acetylation degree = 2.5%, propionylation degree = 46%, number average molecular weight in terms of polystyrene: 75,000; manufactured by Eastman, Ltd., CAP-482-20), 6.3 parts by weight of a polyfunctional acrylic UV-curable monomer (manufactured by Daicel UCB Co. , Ltd., DPHA), and 0.5 parts by weight of a photo initiator (manufactured by Ciba Specialty Chemicals K.K., IRGACURE 184). Incidentally, the cellulose acetate propionate and the acrylic resin having a polymerizable unsaturated group (s) are incompatible with each other, and a low phase separation appears with the concentration of this liquid coating composition. The coating composition was cast on a triacetylcellulose film with the use of a wire bar #24, and then allowed to stand for 10 seconds at a room temperature. The film was immediately put in an explosion-proof oven at 70°C at a wind speed of 3 m/minute and held for 5 seconds, and a convection cell while evaporating the solvent was produced. The coated layer was further dried in the oven for 2 minutes. Thereby a phase separation structure was generated in a convection cell, and an about 9 $\mu$m thick coat layer having an uneven surface structure was formed. Then, the coat layer was subjected to UV curing treatment for about 30 seconds by irradiating ultraviolet ray derived from a metal halide lamp (manufactured by Eyegraphics Co. , Ltd.) to form an anti-glare sheet having hardcoat property and an uneven surface structure.

Comparative Example 2

A coating composition containing a thermosetting fluorine-containing compound ("LR204-6" manufactured by Nissan Chemical Industries, Ltd., solid content: 1% by weight) for a low refraction index layer was applied on the anti-glare sheet obtained in Comparative Example 1 with the use of a wire bar #5. The coated product was dried, and then hot-cured (or heat-cured) at 90°C for 5 minutes to give a low-reflection anti-glare sheet.

Comparative Example 3

In a mixture containing 36.8 parts by weight of MEK (boiling point: 80°C) and 7.73 parts by weight of 1-butanol (boiling point: 113°C) were dissolved 5.24 parts by weight of an acrylic resin having a polymerizable unsaturated group (s) in a side chain thereof [a compound in which 3,4-epoxycyclohexenylmethyl acrylate is added to one or some of carboxyl group(s) in a (meth)acrylic acid-(meth)acrylate copolymer; manufactured by Daicel Chemical Industries, Ltd., CYCLOMER-P (ACA) 320M, solid content: 49.6% by weight, and solvent: 1-methoxy-2-propanol (MMPG) (boiling point: 119°C)], 0.9 parts by weight of a poly(methyl methacrylate) (PMMA) (weight-average molecular weight: 25000; manufactured by Mitsubishi Rayon Co., Ltd., BR87), 6.5 parts by weight of a polyfunctional acrylic UV-curable monomer (manufactured by Daicel UCB Co. , Ltd., DPHA), and 0.5 parts by weight of a photo initiator (manufactured by Ciba Specialty Chemicals K.K., IRGACURE 184). Incidentally, the low molecular weight PMMA and the acrylic resin having a polymerizable unsaturated group(s) are fully compatible with each other, and this liquid coating composition does not induce phase separation by concentration. The coating composition was cast on a triacetylcellulose film with the use of a wire bar #34, and then allowed to stand for 10 seconds at a room temperature. The film was immediately put in an explosion-proof oven at 60°C at a wind speed of 3 m/minute and held for 5 seconds, and a convection cell with evaporating the solvent was produced. The coated layer was further dried in the oven for 2 minutes. Thereby a phase separation structure was generated in a convection cell, and an about 9 $\mu$m thick coat layer having an uneven surface structure was formed. Then, the coat layer was subjected to UV curing treatment for about 30 seconds by irradiating ultraviolet ray derived from a metal halide lamp (manufactured by Eyegraphics Co. , Ltd.) to form an anti-glare sheet having hardcoat property and an uneven surface structure.

For the anti-glare film of each anti-glare sheet obtained in Examples 1 to 4 and Comparative Examples 1 to 3, the total light transmittance, the haze, and the transmitted image clarity were measured. The results are shown in Table 1.

For the performance of each anti-glare sheet obtained in Examples 1 to 4 and Comparative Examples 1 to 3, each anti-glare sheet was mounted on a surface of a 20-inch VA (vertically aligned) LCD panel (having a front luminance of 450 cd/m$^2$, a contrast of 400/1 and a resolution of 60 ppi), and the anti-glareness, the whitening (black level), and the contrast of image were visually observed based on the following criteria in the presence of ambient illumination.

(Anti-glareness)

A: No reflected glare (reflection)
B: Slight reflected glare (reflection)
C: Heavy reflected glare (reflection)

(Whitening)

A: Displayed black image appears to be sharp (or clear).
B: Displayed black image appears to be slightly tinged with white.
C: Displayed black image appears to be tinged with white.
D : Displayed black image appears to be considerably tinged with white.

(Contrast of image)

A: Contrast sensation of the image is recognized sharply (or clearly).
B: Contrast sensation of the image is recognized almost sharply (or clearly).
C: Contrast sensation of the image is recognized slightly.
D: Contrast sensation of the image is difficult to be recognized.

[Table 1]

Table 1

|  |  |  | Examples | | | | Comparative Examples | | |
|---|---|---|---|---|---|---|---|---|---|
|  |  |  | 1 | 2 | 3 | 4 | 1 | 2 | 3 |
| Main solvent | | | MEK | | MEK | | MEK | | MEK |
| Solvent having a boiling point of not lower than 100°C | Kinds | | BuOH, MMPG | | BuOH, MMPG | | BuOH, MMPG | | BuOH, MMPG |
| | Solvent ratio | | 45.0% | | 22.0% | | 33.5% | | 29.9% |
| Drying temperature | | | 70°C | | 60°C | | 70°C | | 70°C |
| Formation of convection cell | | | present | | present | | present | | absent |
| Area ratio of convection domain | | | 38% | | 42% | | 57% | | 0% |
| Phase separation of liquid composition | | | present | | present | | present | | absent |
| Properties of anti-glare of sheet | Total light transmittance | | 91.5% | 93.6% | 91.8% | 93.2% | 90.6% | 91.8% | 91.9% |
| | Haze | | 2.5% | 2.0% | 1.5% | 1.2% | 30.0% | 20.0% | 0.4% |
| | Transmitted image clarity | | 57.2% | 60.7% | 53.2% | 55.8% | 35.0% | 48.0% | 98.0% |
| | Performance | Anti-glareness | A | A | A | A | A | A | C |
| | | Whitening | A | A | B | A | C | B | B |
| | | Contrast | B | A | B | A | C | B | B |

As apparent from the results of Table 1, the anti-glare sheets of Examples 1 to 4 inhibit whitening and have a high anti-glareness and a high contrast of the image. On the other hand, in the sheet of Comparative Example 1, the displayed black image appears to be tinged with white and the contrast of the image is low. The sheet of Comparative Example 2 has a high haze value and a low image clarity. The sheet of the Comparative Example 3 induces heavy reflected glare and has a low anti-glareness.

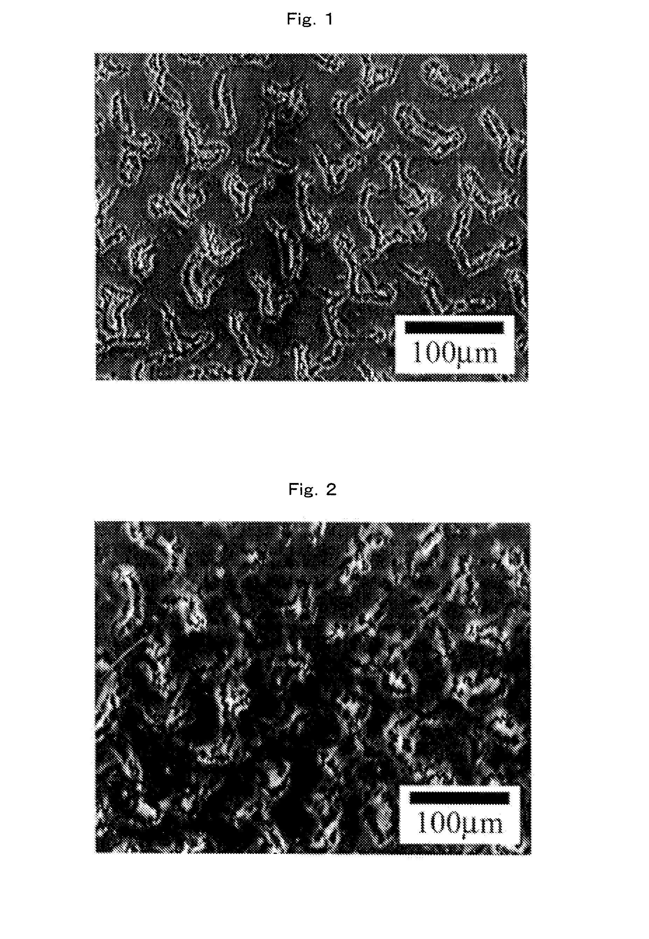

Further, with respect to each of the anti-glare sheets obtained in Examples 2 and 4 and Comparative Example 2 , a black film was pasted on the back side of the anti-glare sheet, and the uneven surface of the sheet was observed by means of a laser reflection microscope and a microscope photograph of the uneven surface structure was taken. Figs. 1 to 3 represent laser reflection microscope photographs (with 5 magnifications) of the uneven surfaces of the anti-glare sheets obtained in Examples 2, 4, and Comparative Example 2, respectively.

As apparent from the photographs of Figs. 1 and 2, the sheets of Examples 2 and 4 have independent ridges formed dispersively and in a random direction on a surface of the film, which conforms that the uneven surface structure is formed by convection.

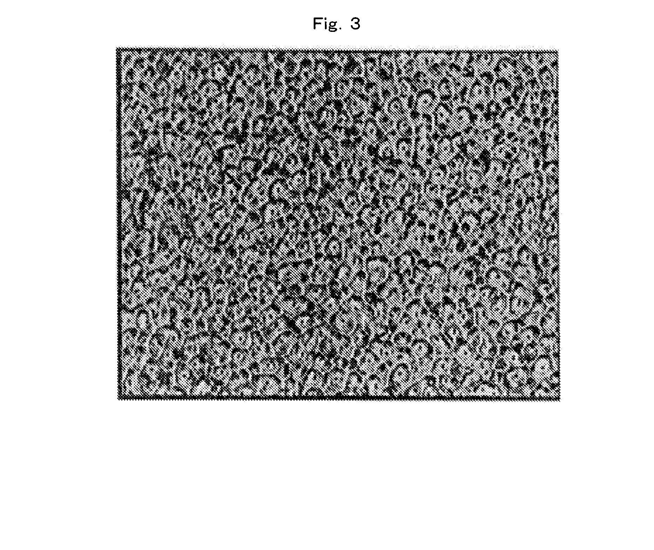

On the other hand, as apparent from the photograph of Fig. 3, the sheet of Comparative Example 2 has a dense structure which has domains at narrow intervals and a small flat area (sea area).

## Claims

1. A anti-glare film comprising a cured product of a nonreactive (meth)acrylic resin having a weight-average molecular weight of 30,000 to 1,000,000, a (meth)acrylic resin having a weight-average molecular weight of 1,000 to 100, 000 and a polymerizable group, and a polyfunctional (meth)acrylate, the anti-glare film having a ridge formed dispersively and in a random direction on a surface thereof, wherein the total area of the ridges is not more than 50% of a whole surface area of the anti-glare film.

2. An anti-glare film according to claim 1, wherein the (meth)acrylic resin having the polymerizable group comprises a (meth)acrylic resin having a (meth)acryloyl group in a side chain thereof.

3. An anti-glare film according to claim 1, wherein the ridge has an average height of 0.05 to 10 $\mu$m and an average width of 0.1 to 30 $\mu$m.

4. An anti-glare film according to claim 1, wherein the ridge has a depression extending along a longitudinal direction thereof.

5. An anti-glare film according to claim 1, wherein the ridge is formed by
   phase separation of at least two components selected from the group consisting of the nonreactive (meth) acrylic resin, the (meth)acrylic resin having the polymerizable group, and the polyfunctional (meth) acrylate due to spinodal decomposition and
   production of convection.

6. A process for producing an anti-glare film, which comprises
   a drying step which comprises producing convection in a coated layer comprising a liquid composition containing a nonreactive (meth)acrylic resin having a weight-average molecular weight of 30,000 to 1,000,000, a (meth)acrylic resin having a weight-average molecular weight of 1,000 to 100,000 and a polymerizable group, a polyfunctional (meth)acrylate, and a first solvent having a boiling point of not lower than 100°C while volatilizing the first solvent, and
   a curing step for curing the resulting dried coated layer.

7. A process according to claim 6, wherein the liquid composition further contains a second solvent having a different boiling point from that of the first solvent.

8. A process according to claim 6, wherein, in the drying step, at least two components of the nonreactive (meth)acrylic resin, the (meth)acrylic resin having the polymerizable group, and the polyfunctional (meth)acrylate are phase-separated by spinodal decomposition, and the production of convention in the liquid composition upheaves the surface of the coated layer to form a ridge.

9. A process according to claim 6, wherein, in the curing step, the coated layer is irradiated with at least one selected from the group consisting of an active energy ray and heat.

10. An anti-glare sheet comprising

a transparent support and
an anti-glare film recited in claim 1 and formed on the support.

11. An anti-glare sheet according to claim 10, which further comprises a low-refraction-index layer formed on the anti-glare film.

12. An anti-glare sheet according to claim 10, which is incorporated in at least one display selected from the group consisting of a liquid crystal display, a cathode ray tube display, a plasma display, and a touch panel-equipped input device.

Fig. 1

Fig. 2

Fig. 3

**INTERNATIONAL SEARCH REPORT**

| | International application No. |
|---|---|
| | PCT/JP2008/055513 |

A.  CLASSIFICATION OF SUBJECT MATTER
*G02B5/02*(2006.01)i, *B32B27/30*(2006.01)i, *C08F290/12*(2006.01)i, *G02F1/1335*
*(2006.01)i, G09F9/00*(2006.01)i

According to International Patent Classification (IPC) or to both national classification and IPC

B.  FIELDS SEARCHED

Minimum documentation searched (classification system followed by classification symbols)
G02B5/02, B32B27/30, C08F290/12, G02F1/1335, G09F9/00

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2006-103070 A  (Daicel Chemical Industries, Ltd.), 20 April, 2006 (20.04.06), Par. Nos. [0031] to [0032], [0042] to [0059], [0060] to [0066] (Family: none) | 1-12 |

☐  Further documents are listed in the continuation of Box C.        ☐   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 July, 2008 (18.07.08) | 29 July, 2008 (29.07.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6018706 A
- JP 10020103 A
- JP 3314965 B
- JP 6016851 A
- JP 2000206317 A
- JP 2004126495 A
- JP 2006106224 A